# FASCICULE DE BREVET EUROPEEN

(11) **EP 0 570 286 B1**
(45) Date de publication et mention de la délivrance du brevet: **30.09.1998**
(21) Numéro de dépôt: 93401220.4
(22) Date de dépôt: 13.05.1993
(51) Int. Cl.: B66C 23/22, G21F 7/06

(54) **Dispositif de levage par câble pour manipuler des charges lourdes à l'intérieur d'une enceinte étanche blindée**
Hebevorrichtung mittels eines Kabels für die Handhabung schwerer Lasten im Inneren eines dichten, gepanzerten Gehäuses
Lifting device with use of a cable for the manipulation of heavy loads inside a sealed armoured enclosure

(30) Priorité: 15.05.1992 FR 9205942
(43) Date de publication de la demande: 18.11.1993
(73) Titulaire: COMMISSARIAT A L'ENERGIE ATOMIQUE, 75015 Paris (FR)
(72) Inventeur: Simon, Alain, F-75014 Paris (FR); Dirollo, Bernard, F-30130 Pont Saint-Esprit (FR)
(74) Mandataire: Dubois-Chabert, Guy

(56) Documents cités:
- DE-A- 2 014 455
- DE-C- 370 575
- FR-A- 1 406 473
- GB-A- 2 236 976
- US-A- 4 858 890

## Description

### DOMAINE DE L'INVENTION

L'invention concerne la manipulation de charges lourdes placées à l'intérieur d'une enceinte inaccessible aux opérateurs, tel un caisson ou une cellule étanche utilisé dans le milieu nucléaire pour le confinement des matières radioactives. A l'intérieur de ce type d'enceinte, caisson ou cellule étanche, des opérations de manipulation sur les produits, appareillages, accessoires ou matériels doivent être exécutées en permanence selon les impératifs de l'exploitation : recherche et développement de procédés, production ou tout simplement entretien et maintenance. Ces manipulations doivent se dérouler en toute sécurité, c'est-à-dire sans rupture de l'étanchéité et au travers d'écrans biologiques, appelés "blindages", constitués de matériaux divers (fonte, plomb, acier, bétons, verres, etc... ) et d'épaisseurs variables (de quelques centimètres à plus d'un mètre), dimensionnés au cas par cas pour assurer la protection de opérateurs contre les effets nocifs des rayonnements alpha, béta, gamma ou de neutrons.

### ART ANTERIEUR ET PROBLEME POSE

Pour effectuer ces manipulations à l'abri de la contamination et des rayonnements, on utilise généralement des télémanipulateurs qui sont des appareils mécaniques traversant les parois de ces enceintes, caissons ou cellules, et les protections radiologiques associées, de manière étanche et sans générer de fuite de rayonnement.

Ces télémanipulateurs sont souvent du type maître-esclave, c'est-à-dire qu'ils sont commandés par l'intermédiaire d'un opérateur se trouvant à l'extérieur de l'enceinte blindée.

Les télémanipulateurs existants et utilisés dans ce domaine sont des appareils complexes et relativement fragiles comportant généralement de nombreux degrés de liberté, de façon à obtenir, pour une petite charge, une très grande précision de manipulation, comparable à celle de la main de l'homme. Cette précision dans les mouvements est obtenue au détriment de la charge. Ainsi, seules des charges de l'ordre de quelques kilogrammes (de 3 à 25 kg) peuvent être soulevées avec de tels télémanipulateurs. Pour soulever des charges plus lourdes placées à l'intérieur d'une enceinte étanche, il est obligatoire de prévoir un palan spécialement positionné à l'intérieur de l'enceinte. Ce type de palan est bien souvent monté sur un pont roulant ou une potence prenant appui sur la structure du caisson ou de la cellule, ce qui limite avec les enceintes courantes sa capacité à 50 ou 100 kg.

Le but de l'invention est de remédier à cet inconvénient en proposant un dispositif de levage pouvant s'adapter dans un des logements et orifices prévus à l'origine pour les traversées de la protection biologique et de l'enceinte étanche par les télémanipulateurs tels qu'ils ont été décrits plus haut, ou éventuellement dans une réservation du même type prévue à cet effet, à la conception de la cellule.

D'autre part, le document US-A-4 858 890 décrit un système de levage de charge placé à travers la paroi d'une pièce à accès limité. Cet appareil est constitué de plusieurs poutres encastrées les unes dans les autres et pouvant coulisser les unes par rapport aux autres. La poutre extérieure peut être fixée à l'intérieur du mur. Les moyens moteur sont placés à l'extérieur du mur, tandis que l'extrémité du corps de levage pend à l'intérieur du local. Aucune articulation pivotante autour d'un axe vertical n'est décrite. On note que le logement dans lequel est placé cet appareil est prévu à cet effet.

### RESUME DE L'INVENTION

L'objet principal de l'invention est un dispositif de levage par câble pour manipuler des charges à l'intérieur d'une enceinte étanche et blindée, le dispositif comprenant :
- une structure porteuse horizontale à l'extrémité de laquelle se trouve
- une poulie autour de laquelle passe
- un câble de levage à l'extrémité de laquelle se trouve
- un moyen de préhension d'objet ;
- des moyens moteurs pour tirer ou laisser descendre le câble de levage ; et
- un système de commande.

Selon l'invention, le dispositif comporte un fourreau de traversée destiné à être inséré dans un trou dans un blindage d'une enceinte, de forme interne correspondant à la forme externe du fourreau, dans lequel fourreau la structure porteuse horizontale est montée coulissante.

La réalisation principale de l'invention prévoit que la structure porteuse horizontale est constituée des éléments suivants :
- un bras principal monté coulissant dans le fourreau et dont la première extrémité se trouve dans l'enceinte ;
- une poutre articulée montée par une première extrémité sur le bras principal, pivotante autour d'un axe vertical et à une deuxième extrémité de laquelle est montée la poulie ; et
- le système de commande pour faire pivoter la poutre.

Ce système de commande est de préférence constitué de deux bielles montées dans le bras principal, parallèlement et le long du bras principal pour former un parallélogramme déformable, une première extrémité de chaque bielle étant montée articulée sur la première extrémité de la poutre articulée de part et d'autre de l'axe de pivotement vertical, une deuxième extrémité étant montée au système de commande.

De préférence, la structure porteuse horizontale est montée coulissante au moyen de galets de guidage montés libres en rotation dans le fourreau de traversée à la périphérie du bras principal.

La réalisation préférentielle des moyens moteur fait que ceux-ci agissent sur le câble par l'intermédiaire d'un axe dynamométrique pour lire le poids de la charge sur le câble.

Le système de commande comprend de préférence un système vis/écrou pour bloquer le déplacement longitudinal de la structure porteuse horizontale.

L'invention s'applique particulièrement à des enceintes étanches et est équipée dans ce cas d'un système d'étanchéité avec bague éjectable.

### LISTE DES FIGURES

L'invention et ses différentes caractéristiques techniques seront mieux comprises à la lecture de la description suivante qui est accompagnée de figures représentant respectivement :
- figure 1, en coupe, l'utilisation du dispositif selon l'invention dans une enceinte étanche ;
- figures 2A et 2B, une vue de côté et une vue de dessus du dispositif selon l'invention.

### DESCRIPTION DETAILLEE D'UN MODE DE REALISATION DE L'INVENTION

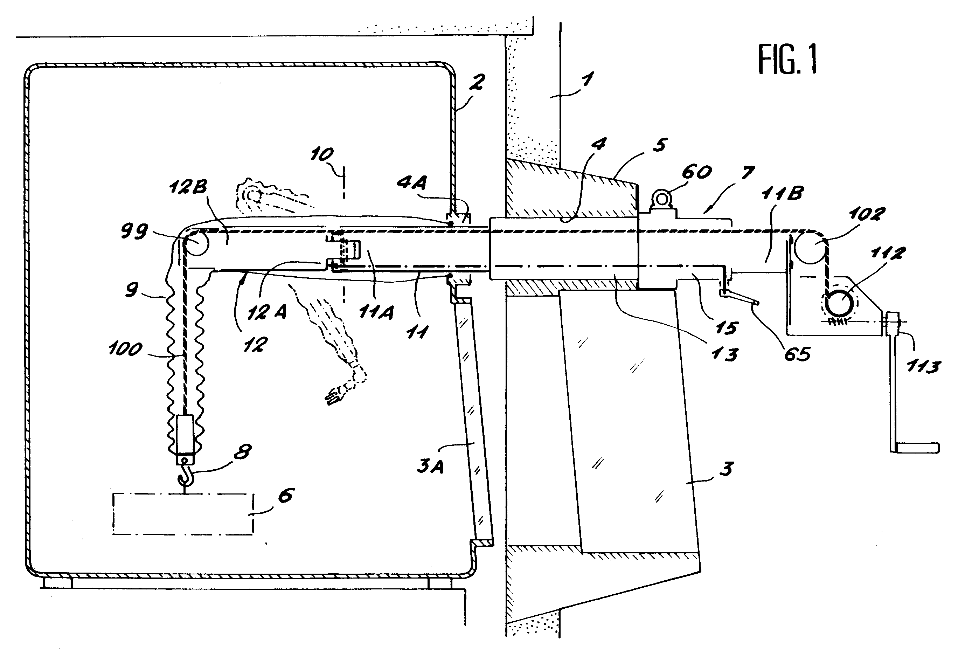

La figure 1 montre le dispositif de levage selon l'invention 7 placé pour être opérationnel à l'intérieur d'une enceinte métallique étanche 2. Cette dernière est placée à l'intérieur d'un blindage 1. L'ensemble constitue une enceinte étanche blindée prévue pour la manipulation de charges 6 sous rayonnements gamma.

Le blindage 1 possède un cadre 5 à l'intérieur duquel est placée une vitre de visualisation 3 pour les opérateurs se trouvant à l'extérieur de l'enceinte 2. Ce cadre possède également un trou 4 de traversée pour le dispositif selon l'invention 7 et pour d'autres appareils, tels que des télémanipulateurs.

On note que dans le cas de l'existence d'une enceinte métallique 2, cette dernière doit également posséder un moyen de vision, vitre 3A ou un système de télévision et un trou 4A correspondant.

Le dispositif de levage selon l'invention 7 est donc destiné à être placé à l'intérieur du trou 4 du cadre mural 5 à la place d'un télémanipulateur s'y trouvant auparavant et étant opérationnel à l'intérieur de l'enceinte étanche 2 ou dans un trou identique prévu à cet effet à la conception de l'enceinte. Le dispositif de levage selon l'invention 7 doit avoir une section transversale correspondant à la forme interne du trou 4 du cadre mural 5. Cette section est généralement ronde.

A propos de l'étanchéité du système, on précise que les télémanipulateurs utilisés à l'intérieur de telles enceintes sont entourés d'une manche de protection 9 élastique. Lors du retrait d'un tel télémanipulateur, la manche 9 reste à l'intérieur même de l'enceinte étanche 2. Lors de la mise en place du dispositif de levage selon l'invention 7, celui-ci est équipé d'une nouvelle manche de protection 9 et d'un système d'étanchéité sur bague éjectable. Cette mise en place provoque le largage de l'ancienne manche de protection 9 qui tombe dans l'enceinte 2.

En effet, de manière connue, ce système comprend par exemple une bague support, une bague d'enceinte, une bague d'immobilisation et un joint à lèvres. Lors de la mise en place du dispositif de levage selon l'invention, l'ancienne manche de protection est repoussée à l'intérieur de l'enceinte par ce système et par la nouvelle manche de protection 9 qui prend la place de l'ancienne. On précise qu'un tel système d'étanchéité est déjà décrit dans le brevet d'invention français FR-A-1 484 712.

Pour assurer à la fois le levage et la manipulation des charges 6 à l'intérieur de l'enceinte 2, le dispositif de levage selon l'invention doit posséder à l'intérieur de celle-ci plusieurs degrés de liberté au bout de son câble 100, et en particulier à son crochet de préhension 8. Des moyens sont donc prévus pour faire coulisser horizontalement le dispositif 7 à travers l'enceinte 2 et le blindage 1 et de préférence pour faire pivoter le crochet de préhension 8 du câble 100 autour d'un axe vertical de pivotement 10.

Sur cette figure 1, on peut distinguer les principaux éléments du dispositif de levage. Ils sont constitués principalement d'une structure porteuse horizontale à une première extrémité de laquelle est montée tournante une poulie 99 autour de laquelle passe le câble de levage 100 à l'extrémité duquel se trouve un moyen de préhension, tel que le crochet de préhension 8. A l'autre extrémité de la structure porteuse, se trouvent des moyens moteurs schématisés par une poulie de renvoi 102 et une manivelle de manutention 113. Selon l'invention, cette structure porteuse horizontale comprend un fourreau de traversée 13 dans lequel elle est montée coulissante. Ce fourreau de traversée 13 est fixé au cadre mural 5 du blindage 1. La structure porteuse horizontale peut donc coulisser horizontalement à l'intérieur de l'enceinte étanche 2.

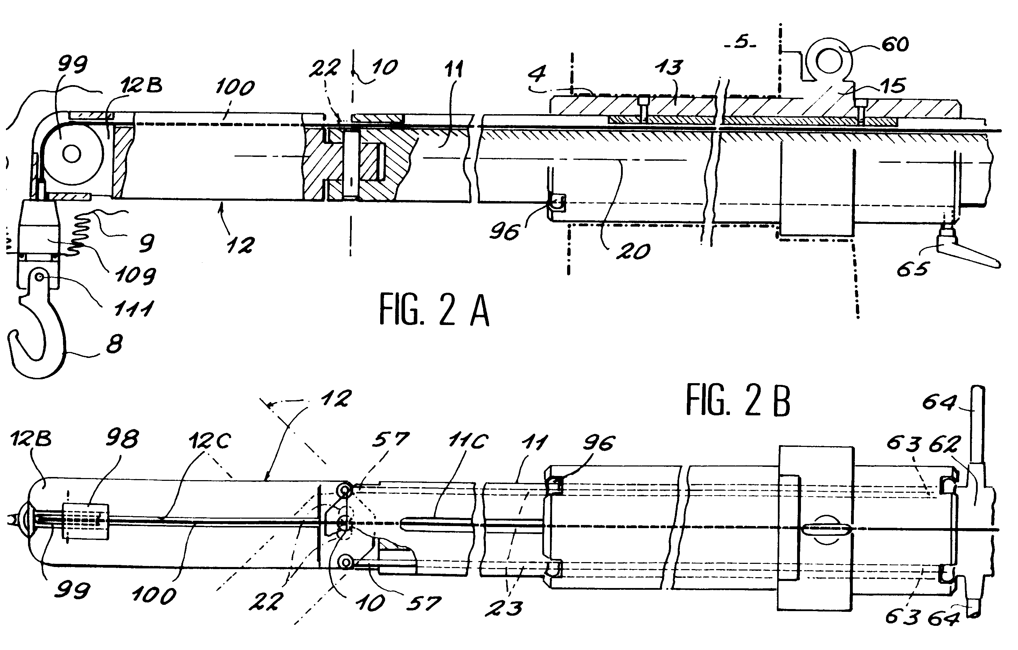

La constitution préférentielle du dispositif de levage selon l'invention est détaillée sur les figures 2A et 2B. Sur la figure 2A, on retrouve certains éléments déjà cités, tels que le crochet de préhension 8, le câble 100, la poulie 99 montée tournante autour d'un axe horizontal, le cadre mural 5 et le fourreau 13.

Le cadre mural 5 ayant un trou 4 de diamètre déterminé et correspondant aux appareils précédemment installés, à savoir un télémanipulateur classique, le fourreau de traversée 13 a un diamètre externe correspondant à ce diamètre, de manière à pouvoir y être logé et fixé de façon étanche. On peut utiliser à cet effet une bride 15 et des vis de fixation, non représentées, de la bride 15 dans le cadre mural. Un anneau de levage 60 peut compléter cette bride 15 pour faciliter le transport et la manutention du dispositif de levage, lors de son introduction et de son extraction, par exemple au moyen d'un pont.

La structure porteuse horizontale comprend principalement un bras principal 11 monté coulissant à l'intérieur du fourreau de traversée 13 et une poutre articulée 12. Cette dernière est montée pivotante par une première extrémité 12A autour d'un axe vertical 10 à une première extrémité 11A du bras principal 11. Pour réaliser ce montage, la première extrémité 11A du bras principal est usinée en forme de chape femelle recevant ainsi la première extrémité 12A de la poutre articulée usinée en chape mâle. De ce fait, la poulie 99 décrit un arc de cercle autour de l'axe vertical 10 lorsque la poutre articulée 12 pivote. De même, le crochet de préhension 8 décrit donc également cet arc de cercle. Il est ainsi possible à celui-ci de balayer la plus grande partie de la surface au sol de l'enceinte étanche, grâce à la combinaison de ce mouvement de pivotement autour de l'axe vertical 10 et du mouvement de translation horizontal dans le fourreau de traversée 13 le long de l'axe horizontal 20.

La poulie 99 est en fait montée à la deuxième extrémité 12B de la poutre articulée 12.

Comme le montre la figure 2B, le câble 100 est placé dans la poutre articulée 12, à l'intérieur d'une rainure 12C et dans le bras principal 11, à l'intérieur d'une rainure 11C. Une première pièce de fixation 98 est placée à la deuxième extrémité 12B de la poutre articulée 12 pour maintenir le câble 100 dans la gorge de la poulie 99, quels que soient les mouvements de la poutre articulée 12 et les charges suspendues au câble 100. De même, deux poulies de guidage 22 sont fixées sur la première extrémité 11A du bras principal 11 au niveau de l'axe vertical de pivotement 10.

Le mouvement de coulissement du bras principal 11 dans le fourreau de traversée 13 peut être réalisé au moyen de plusieurs galets 96 montés à chaque extrémité du fourreau de traversée 13. Ces galets ont donc des axes de rotation orthogonaux à l'axe de coulissement horizontal 20. On peut ainsi prévoir six galets 96 à chaque extrémité du fourreau de traversée 13. En correspondance, le bras principal 11 possède des portées sur lesquelles peuvent rouler les galets 96. Pour que la poutre articulée 12 puisse pivoter, il est nécessaire d'utiliser des éléments de transmission du sytème de commande, puisque cette poutre articulée 12 se trouve à l'intérieur de l'enceinte étanche alors que l'opérateur éventuel se trouve à l'extérieur. Une réalisation particulière de ces éléments de transmission peut être constituée principalement de deux bielles 23 disposées longitudinalement à l'intérieur du bras principal 11, parallèles entre elles. Une de leurs premières extrémités 57 est montée pivotante à la première extrémité 12A de la poutre articulée 12, de part et d'autre de l'axe de pivotement 10. Une deuxième extrémité 63 est montée à un système de commande 62.

Le système de commande 62 des bielles 23 est schématisé par deux poignées 64 permettant de translater les deux bielles 23 dans deux sens opposés. Les deux bielles 23 forment ainsi avec la première extrémité 12A de la poutre articulée 12 et le système de commande 62 un parallélogramme déformable.

Le crochet de préhension 8 est arrimé au câble 100 par l'intermédiaire d'une goupille 111 à une embase 109 fixée à la manche de protection 9. Lorsque le câble 100 est tiré au maximum, le crochet de préhension 8 et l'embase 109 pivotent dans une position proche de l'horizontale restant inscrit dans la forme extérieure de la structure porteuse horizontale, permettant ainsi l'introduction du dispositif de levage selon l'invention à l'intérieur de l'enceinte par le trou 4 du cadre mural 5.

Pour le largage de la manche de protection 9, sa déconnexion et celle de l'embase 109 et du crochet 8 se font de manière connue et classique, par exemple au moyen d'un étrier basculant. Il est ainsi possible, lorsque l'on retire le dispositif de levage selon l'invention du trou 4, de larguer ces trois éléments à l'intérieur de la cellule. Le dispositif connu permettant d'assurer l'étanchéité est un système d'étanchéité avec bague éjectable. Dans ce type de système, tous les éléments assurant l'étanchéité de l'appareil précédemment installés sont donc largués à l'intérieur de l'enceinte étanche, poussés par les mêmes éléments d'étanchéité du nouvel instrument à placer à la place de l'ancien.

En revenant à la figure 1, les premiers moyens moteur permettant de tirer ou laisser descendre le câble sont schématisés par la manivelle 113. On peut utiliser également un treuil motorisé ainsi qu'un système de réduction vis/roue dentée. On peut également utiliser un axe dynamométrique 112 autour duquel passe le câble 100 pour permettre la lecture du poids de la charge suspendue au câble 100. Cet axe dynamométrique 112 permet également l'arrêt de sécurité de la motorisation du câble 100 vis-à-vis d'une charge maximale déterminée.

Un système vis/écrou schématisé par la poignée 65 permet de bloquer le bras principal 11 à l'intérieur du fourreau de traversée 13 pour bloquer l'ensemble de la structure porteuse horizontale dans une position longitudinale déterminée.

Il a été précisé précédemment que la forme préférentielle du fourreau de traversée 11 est circulaire. On signale qu'il est de toute manière composé d'un tube dont le profil extérieur est en conformité avec celui des trous de traversée 4 des cadres muraux 5 de télémanipulateurs standards.

La portée du fourreau de traversée 13 sur le bras principal 11 a une longueur déterminée suffisante pour permettre la manutention de charges lourdes au bout de la structure porteuse horizontale.

La présente description n'est qu'un exemple de réalisation. En effet, les organes de commande peuvent être différents. Par exemple, les bielles 23 peuvent être remplacées par une boucle fermée constituée d'une chaîne ou d'une courroie et d'un pignon. On peut ainsi obtenir un pivotement de la poutre articulée plus important.

De même, le câble 100 peut être remplacé par une chaîne à ruban permettant un enroulement en spirale.

On peut également envisager l'utilisation d'un mouflage, notamment au niveau de l'embase 109.

Le système vis/écrou de blocage 65 peut être remplacé par un système pignon/crémaillère.

On peut ainsi assurer différents mouvements de charges placées à l'intérieur de l'enceinte étanche sur une zone d'intervention relativement importante à partir d'un passage fixe symbolisé par un trou 4 d'un cadre mural 5 prévu au préalable pour un télémanipulateur classique.

Ce dispositif permet de manipuler des charges élevées, pouvant atteindre plusieurs centaines de kilogrammes, sans influer sur la structure de l'enceinte de confinement étant donné que les forces de réaction appliquées à l'appareil sont entièrement reprises par la structure du blindage ou du mur entourant l'enceinte étanche. On vient ainsi placer, en lieu et place d'un télémanipulateur classique ou dans la réservation éventuellement prévue à cet effet, un dispositif de levage spécial pour effectuer momentanément des opérations de levage et de déplacement de charges lourdes à l'intérieur de l'enceinte étanche.

## Revendications

1. Dispositif de levage par câble pour manipuler des Charges (6) à l'intérieur d'une enceinte étanche et blindée (2), comprenant :
- une structure porteuse horizontale à l'extrémité de laquelle se trouve
- une poulie (99) autour de laquelle passe un câble de levage (100) à l'extrémité duquel se trouve
- un moyen de préhension d'objet (8) ;
- des premiers moyens moteur (13) pour tirer ou laisser descendre le câble de levage (100) ; et
- un système de commande (62), caractérisé en ce qu'il comprend un fourreau de traversée (13) destiné à être inséré dans un trou (4) dans un blindage (1) d'une enceinte, de forme interne correspondant à la forme externe du fourreau, dans lequel fourreau (13) la structure porteuse horizontale est montée coulissante.

2. Dispositif de levage selon la revendication 1, caractérisé en ce que la structure porteuse horizontale comprend :
- un bras principal (11) monté coulissant dans le fourreau de traversée (13), et dont une première extrémité (11A) se trouve dans l'enceinte (2) ; et
- une poutre articulée (12) montée par une première extrémité (12A) pivotante sur le bras principal (11) autour d'un axe de pivotement vertical (10) et à une deuxième extrémité (12B) de laquelle est montée la poulie (99).

3. Dispositif de levage selon la revendication 1 ou 2, caractérisé en ce que le système de commande (62) est constitué de deux bielles (23) montées dans le bras principal (11), parallèles entre elles de sorte à former un parallèlogramme, une première de leurs extrémités (57) étant montée articulée sur la première extrémité (12A) de la poutre articulée (12) de part et d'autre de l'axe de pivotement (10), une deuxième extrémité (63) étant montée au système de commande (62).

4. Dispositif de levage selon l'une quelconque des revendications précédentes, caractérisé en ce que des galets de guidage (96) sont montés libres en rotation dans le fourreau de traversée (13) à la périphérie du bras principal (11) pour assurer le coulissement.

5. Dispositif de levage selon l'une quelconque des revendications précédentes, caractérisé en ce que les moyens moteur (113) agissent sur le câble (100) par l'intermédiaire d'un axe dynamométrique (112) pour lire le poids de la charge suspendu au câble (100).

6. Dispositif de levage selon l'une quelconque des revendications précédentes, caractérisé en ce qu'il comprend un système de blocage vis/écrou (65) pour bloquer en translation le bras principal (11) dans le fourreau de traversée (13).

7. Dispositif de levage selon l'une quelconque des revendications précédentes, caractérisé en ce qu'il s'applique à des enceintes étanches (2), le dispositif étant équipé d'un système d'étanchéité avec bague éjectable.

## Claims

1. Cable lifting device for handling loads (6) within a tight, shielded enclosure (2) comprising a horizontal carrier structure at the end of which is located a pulley (99) around which passes a lifting cable (100) at whose end there is an object gripping means (8), first motor means (13) for pulling or lowering the lifting cable (100) and a control system (62), characterized in that it comprises a passage hose (13), in which the horizontal carrier structure is installed in sliding manner and whose external shape corresponds with the internal shape of a hole (4) in a shield (1) of the enclosure.

2. Lifting device according to claim 1, characterized in that the horizontal carrier structure comprises a main arm (11) slidingly mounted in the passage hose (13) and whereof a first end (11A) is located in the enclosure (2) and an articulated beam (12) fitted by a first end (12A) to the main arm (11) so as to pivot about a vertical pivoting axis (10) and on a second end (12B) of which is fitted the pulley (99).

3. Lifting device according to claim 1 or 2, characterized in that the control system (62) comprises two rods (23) fitted in the main arm (11) and which are parallel to one another so as to form a parallelogram, a first of their ends (57) being fitted in articulated manner to the first end (12A) of the articulated beam (12) on either side of the pivoting axis (10), a second end (63) being fitted to the control system (62).

4. Lifting device according to any one of the preceding claims, characterized in that guide rollers (96) are mounted so as to freely rotate in the passage hose (13) on the periphery of the main arm (11) in order to ensure sliding.

5. Lifting device according to any one of the preceding claims, characterized in that motor means (113) act on the cable (100) by means of a dynamometer shaft (112) in order to read off the weight of the load suspended on the cable (100).

6. Lifting device according to any one of the preceding claims, characterized in that it comprises a screw/nut locking system (65) for locking in translation the main arm (11) in the passage hose (13).

7. Lifting device according to any one of the preceding claims, characterized in that it is applicable to tight enclosures (12), the device being equipped with a sealing system having an ejectable ring.

## Patentansprüche

1. Hebevorrichtung mittels eines Kabels für die Handhabung schwerer Lasten (6) im Innern eines dichten und gepanzerten bzw. abgeschirmten Gehäuses (2), umfassend:
- eine horizontale Tragtruktur, und an deren Ende
- eine Kabelrolle (99), um die ein Hubkabel (100) läuft, und an dessen Ende
- eine Einrichtung (8) zum Greifen bzw. Tragen eines Objekts;
- erste Antriebseinrichtungen (13), um das Hubkabel (100) hochzuziehen oder hinunterzulassen; und
- ein Betätigungssystem (62),
**dadurch gekennzeichnet,**
daß sie eine Durchgangshülse (13) umfaßt, dazu bestimmt, in ein Loch (4) in einer Abschirmung (1) eines Gehäuses eingefügt zu werden, dessen Innenform der Außenform der Hülse entspricht, wobei die horizontale Tragstruktur in dieser Hülse gleitend gelagert ist.

2. Hebevorrichtung nach Anspruch 1, dadurch gekennzeichnet, daß die horizontale Tragstruktur umfaßt:
- einen Hauptarm (11), der gleitend in der Durchgangshülse (13) gelagert ist und dessen erstes Ende (11A) sich in dem Gehäuse (2) befindet; und
- einen gelenkigen Träger (12), der mit einem ersten Ende (12A) schwenkbar um eine vertikale Schwenkachse (10) an den Hauptarm (11) montiert ist und auf dessen zweites Ende (12B) die Kabelrolle (99) montiert ist.

3. Hebevorrichtung nach Anspruch 1 oder 2, dadurch gekennzeichnet, daß das Betägigungssystem (62) durch zwei in dem Hauptarm (11) angebrachte Anlenkstangen (23) gebildet wird, die parallel zueinander sind, so daß sie ein Parallelogramm bilden, wobei ein erstes ihrer Enden (57) an dem ersten Ende (12A) des gelenkigen Trägers (12) beiderseits der Schwenkachse (10) angebracht ist und das zweite Ende (63) am Betätigungssystem (62).

4. Hebevorrichtung nach einem der vorangehenden Ansprüche, dadurch gekennzeichnet, daß Führungsrollen (96) drehfrei in der Durchgangshülse (13) angebracht sind, am Umfang des Hauptarms (11), um das Gleiten zu gewährleisten.

5. Hebevorrichtung nach einem der vorangehenden Ansprüche, dadurch gekennzeichnet, daß die Antriebseinrichtungen (113) auf das Kabel (100) mittels einer dynamometrischen Achse (112) zum Ablesen der an dem Kabel (100) aufgehängten Last wirken.

6. Hebevorrichtung nach einem der vorangehenden Ansprüche, dadurch gekennzeichnet, daß sie ein Schraube/Mutter-Blockiersystem (65) umfaßt, um die Verschiebung des Hauptarms (11) in der Durchgangshülse (13) zu blockieren.

7. Hebevorrichtung nach einem der vorangehenden Ansprüche, dadurch gekennzeichnet, daß sie bei dichten Gehäusen (2) verwendet wird, wobei die Vorrichtung mit einem Abdichtungssystem mit abwerfbarem Ring ausgerüstet ist.
